# EUROPEAN PATENT APPLICATION

(11) **EP 1 981 011 A2**
(43) Date of publication of application: **15.10.2008**
(21) Application number: 08100249.5
(22) Date of filing: 09.01.2008
(51) Int. Cl.: G08C 17/00

(54) **Method and apparatus for providing help**

(30) Priority: 09.04.2007 KR 20070034626
(71) Applicant: Samsung Electronics Co., Ltd., Suwon-si, Gyeonggi-do 442-742 (KR)
(72) Inventor: Moon, Ji-bum, Seoul (KR)
(74) Representative: Walaski, Jan Filip

(57) **Abstract**

Provided are a method and apparatus for providing help information about manipulating an apparatus. The method includes determining help information to be provided according to a state of button manipulation by a user, determining at least one notifying method for providing the help information referring to behavior pattern information of the user, and outputting the help information to a user manipulator using the at least one notifying method.

## Description

The present invention relates to providing a user with help information about manipulating a device that is operated using a remote control having buttons thereon.

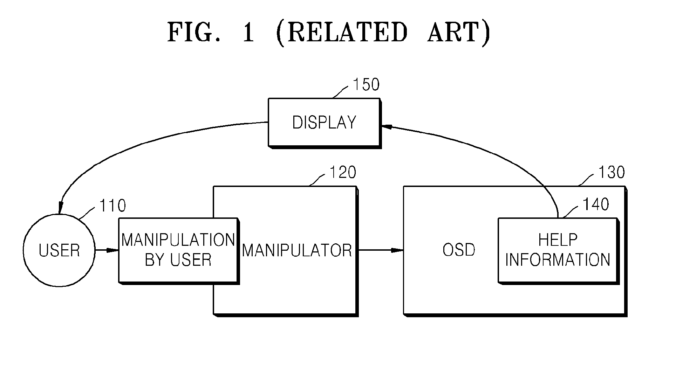

FIG. 1 is a block diagram of a related art apparatus for providing help.

Referring to FIG. 1, according to a related art help function, when a user 110 manipulates a manipulator 120, the user 110 can approach a designated part of an on screen display (OSD) 130, and when the user 110 requests help about a certain function and help information 140 about the certain function exists, the user 110 is notified of the help information 140 using a display 150. In the related art apparatus, the help function is provided only as a visual notification using a simple display, and there should be a user's request for help about a certain function for the help information to be provided. Accordingly, it is difficult for a user to understand functions of a device and use the functions.

Although a technology of providing displayed help using a remote controller is being studied, a notifying method is ambiguous and ineffective. Accordingly, a detailed applicable model has not yet been suggested.

The present invention provides a method and apparatus for providing help information to a user of a device operated using a remote control having buttons thereon.

The present invention also provides a method and apparatus for providing help information desired by a user with or without a feedback in various methods suitable to each situation, when the user requests help.

According to an aspect of the present invention, there is provided a method of providing help information about manipulating an apparatus, the method including: determining the help information to be provided according to a state of button manipulation by a user; determining at least one notifying method, among a plurality of notifying methods, for providing the help information referring to behavior pattern information of the user; and outputting the help information to a user manipulator using the at least one notifying method.

The determining of the help information to be provided may include: if an error is detected in the button manipulation, generating a function list, which comprises at least one predicted function, by predicting a function that the user is going to execute; and determining information about a button manipulation method for executing a function selected by the user from the function list as the help information to be provided.

The method may further include managing the behavior pattern information, which contains a weight according to a time taken for the user to determine how to perform a particular function of the user and a success rate of performing the particular function when various notifying method sets are used for each function of the apparatus, wherein the determining of at least one notifying method may include determining a notifying method set having a highest weight in a function related to the help information as the at least one notifying method.

The managing of the behavior pattern information may include changing the weight of the various notifying method sets corresponding to each function according to the change of the time taken and the success rate.

The managing of the behavior pattern information may include giving the highest weight to a notifying method set requested by the user.

The at least one notifying method may be at least one of a visual notifying method, a tactile notifying method, and an acoustic notifying method used by the user manipulator.

The visual notifying method may induce the button manipulation of the user using at least one of a luminous body for a button indication and a luminous body for a path indication, prepared on the user manipulator.

The tactile notifying method may induce the button manipulation of the user by vibrating a button corresponding to the help information or changing temperature of the button by operating a vibrator prepared in the user manipulator.

The acoustic notifying method may reproduce audio data for inducing the button manipulation of the user or for providing a feedback about the button manipulation of the user, using a speaker installed in the user manipulator.

According to another aspect of the present invention, there is provided an apparatus for providing help information about manipulation, the apparatus including: a help determiner which determines help information to be provided according to a state of a button manipulation of a user and determines at least one notifying method for providing the help information referring to behavior pattern information of the user; and a help notification controller which controls a help notifier in a user manipulator to output the help information using the at least one notifying method.

According to another aspect of the present invention, there is provided a user input apparatus for providing help information about manipulating an apparatus, the user input apparatus including: a main body which comprises a plurality of buttons; and a help notifier which comprises at least one of a visual notifier, a tactile notifier, and an acoustic notifier, for notifying about information on manipulating a button from among the plurality of buttons in order to perform a certain function of the apparatus.

The above and other aspects of the present invention will become more apparent by describing in detail exemplary embodiments thereof with reference to the attached drawings, in which:
FIG. 1 is a block diagram of a related art apparatus for providing help;
FIG. 2 is a block diagram of an apparatus for providing help and a user input apparatus according to an exemplary embodiment of the present invention;
FIG. 3 is a block diagram of an apparatus for providing help and a user input apparatus according to another exemplary embodiment of the present invention;
FIG. 4 is a flowchart of a method of providing help according to an exemplary embodiment of the present invention;
FIG. 5 is a diagram for describing a concept of a method of determining a notifying method for each function according to an exemplary embodiment of the present invention;
FIG. 6 is a diagram illustrating when a host and a controller are separated according to an exemplary embodiment of the present invention;
FIG. 7 is a diagram illustrating when a host and a controller are combined according to an exemplary embodiment of the present invention; and
FIGS. 8A through 8G are diagrams illustrating how a user is notified of help information according to an exemplary embodiment of the present invention.

Hereinafter, the present invention will be described more fully with reference to the accompanying drawings, in which exemplary embodiments of the invention are shown.

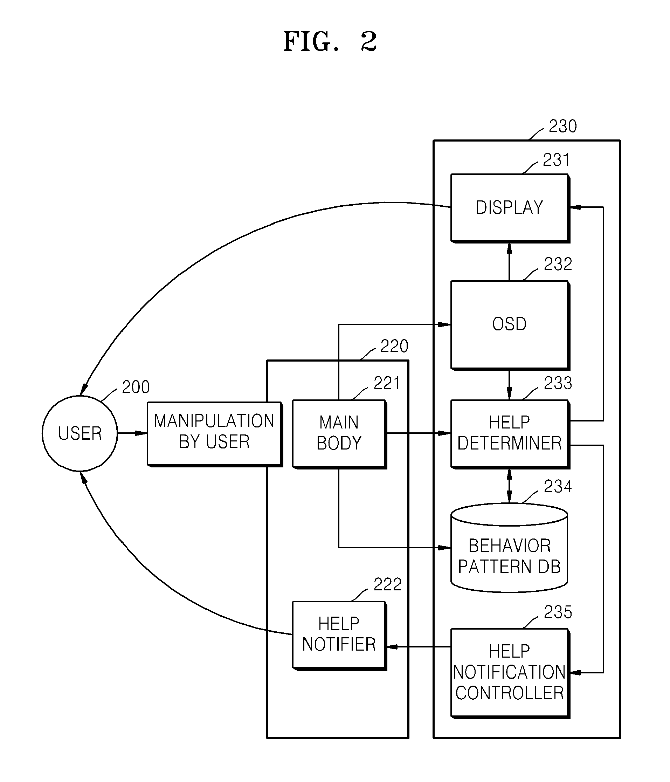

FIG. 2 is a block diagram of an apparatus 230 for providing help and a user input apparatus 220 according to an exemplary embodiment of the present invention.

Referring to FIG. 2, the apparatus 230, which is a host, includes a display 231 which displays an on-screen-display (OSD) 232, a help determiner 233 which determines help information to be provided according to a state of button manipulation by a user 200 and determines at least one notifying method for providing help information referring to information stored in a behavior pattern database 234, and a help notification controller 235 which controls a help notifier 222 included in the user input apparatus 220, which may be a user manipulator, to output help information using the at least one determined notifying method.

The user 200 manipulates the apparatus 230 using the user input apparatus 220, and the help determiner 233 determines help information to be provided when the user 200 requests predetermined help information by manipulation or when it is determined that help is required while monitoring the state of button manipulation by the user 200. For example, when the user 200 repeats unnecessary manipulation in the OSD 232, the help determiner 233 determines that there is an error in button manipulation, and thus generates a function list including at least one predicted function by predicting a function that the user 200 may desire to execute, and displays the function list on the display 231. When the user 200 selects a predetermined function from the displayed function list, the help determiner 233 determines that information about button manipulation to execute the selected function should be provided.

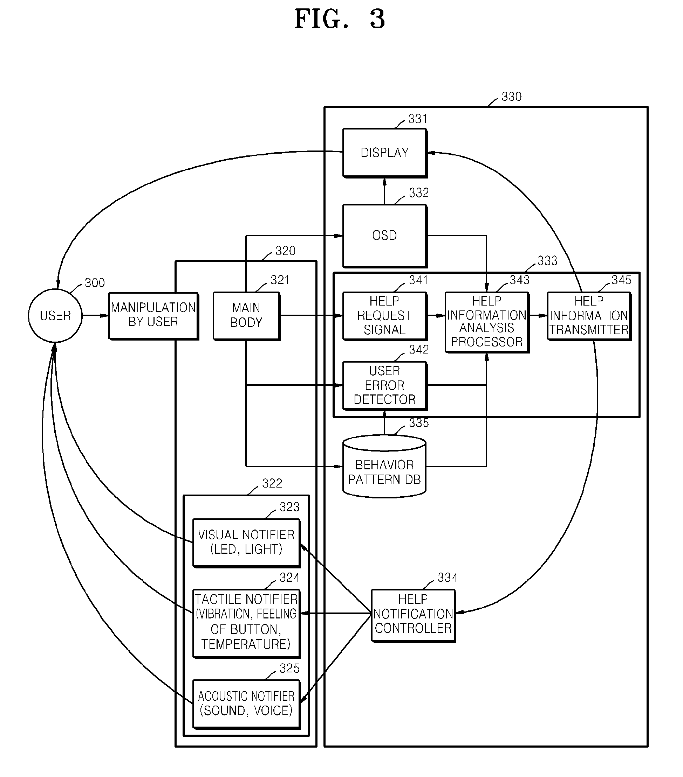

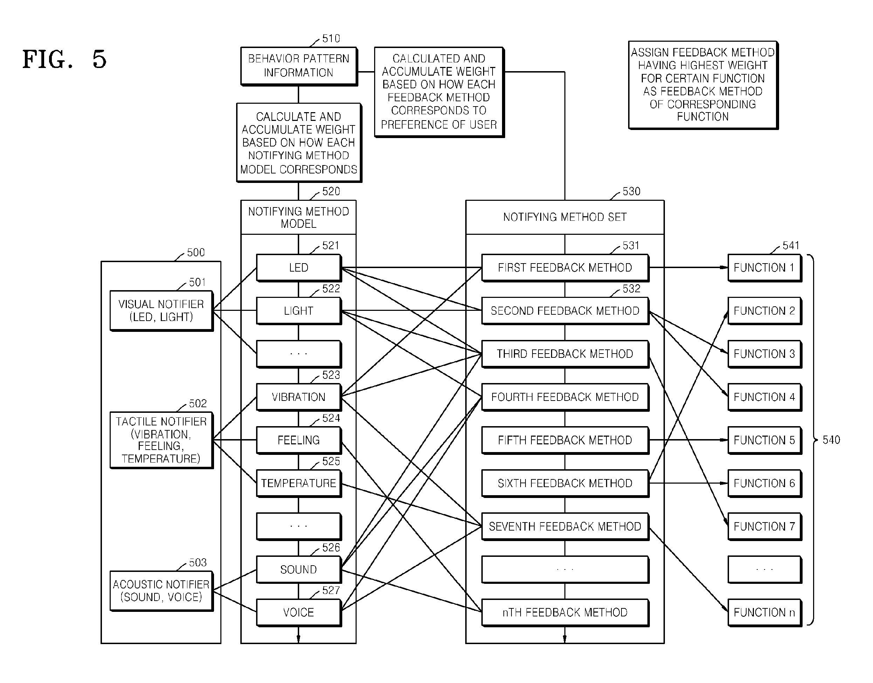

Also, the help determiner 233 may determine a notifying method set having the highest weight in a function related to the help information to be provided, referring to the behavior pattern database 234 which stores a weight determined according to a time taken for a user to determine how to perform a particular function and a success rate of performing the particular function when various notifying method sets are used for each function of the apparatus 230. The various notifying methods will be described later with reference to FIG. 3. Also, the weight for each notifying method will be described later with reference to FIG. 5.

The user input apparatus 220, which may be a controller, includes a main body 221 which includes a plurality of buttons for user manipulation, analyzes the user manipulation, and notifies the apparatus 230 of the analyzed user manipulation, and a help notifier 222 which uses various notifying methods. The apparatus 230 may be integrated with or separate from the user input apparatus 220. Help information is notified to the user 200 using the user input apparatus 220, and the help information may be additionally or repeatedly outputted through the display 231. The help notifier 222 notifies the user 200 of predetermined help information using a predetermined notifying method according to the control of the help notification controller 235.

FIG. 3 is a block diagram of an apparatus 330 for providing help information and a user input apparatus 320 according to another exemplary embodiment of the present invention.

Referring to FIG. 3, the apparatus 330 includes a display 331 which displays an OSD 332 and help information, a help determiner 333 which determines help information to be provided and a notifying method referring to a behavior pattern database 335, and a help notification controller 334 which controls the user input apparatus 320 to provide the help information to a user 300 according to the help information and the notifying method determined by the help determiner 333. The user input apparatus 320 includes a main body 321, which notifies the apparatus 330 of manipulation of the user 300 so that searches using the OSD 332, transmission of a help request signal 341, an error detection, and a behavior pattern of the user 300 can be stored in the behavior pattern database 335, and a help notifier 322 which includes at least one of a visual notifier 323 which outputs help information using a visual method, a tactile notifier 324 which outputs help information using a tactile method, and an acoustic notifier 324 which outputs help information using an acoustic method, under the control of the help notification controller 334.

The user 300 manipulates the apparatus 330, which is a host, by manipulating the user input apparatus 320, such as a remote control including a plurality of buttons. When the user 300 requests help because the user 300 does not know how to execute a desired function, that is, how to manipulate the buttons for executing a desired function, a help information analysis processor 343 searches for help information that the user 300 desires. Also, when the user 300 makes an error while manipulating a button in the OSD 332, a user error detector 342 detects the error by analyzing the state of button manipulation, and the help information analysis processor 343 analyzes the error and derives a series of help information. Also, the help information analysis processor 343 determines whether to provide the help information by outputting the help information to the display 331, by notifying the user 300 of the help information using the user input apparatus 320, or by both outputting the help information to the display 331 and using the user input apparatus 320, according to help format the user 300 prefers or a skill level of the user 300, by referring to the behavior pattern database 335. When the help information is notified using the user input apparatus 320, the help information analysis processor 343 also determines through which notifier the help information is to be notified, among the visual notifier 323, the tactile notifier 324, and the acoustic notifier 325. A help information transmitter 345 wiredly or wirelessly transmits the help information to the display 331 and/or to the help notification controller 334 based on the determination of the help information analysis processor 343. The help notification controller 334 controls the help notifier 322 such that the help information is outputted using at least one of a visual notifying method, a tactile notifying method, and an acoustic notifying method.

The visual notifier 323 in the help notifier 322 in the user input apparatus 320 visually identifies a button, that the user 300 should manipulate to execute the desired function, from the remaining buttons. The visual notifier 323 can be embodied by installing luminous bodies having a single or plurality of colors and/or forms on or around the buttons. Alternatively or additionally, the visual notifier 323 can be embodied by installing luminous bodies for representing lines, surfaces, figures, labels and/or the other visual expressions on spaces between the buttons in order to indicate an order in which the buttons are pressed (hereinafter referred to as a path between the buttons). Using this visual identification, a certain function learning guide can be provided, which shows connection of a series of buttons using the spaces between the buttons and allows the user 300 to manipulate the series of buttons in an order. The luminous body may be a light emitting diode (LED), but is not limited thereto.

The tactile notifier 324 induces button manipulation of the user 300 by vibrating the buttons, changing the feeling of the buttons, or changing the temperature of the buttons so that the user 300 can recognize each button or identify which button to press. The tactile notifier 324 can be embodied using a vibrator, but is not limited thereto, and it is obvious that the tactile notifier 324 can be embodied using other methods. Using the tactile notifier 324, the user 300 knows which button to press from a tactile sense only, without checking the button with his or her eyes.

The acoustic notifier 325 reproduces audio data, such as a sound or a voice, for inducing button manipulation by the user 300 or providing a feedback about button manipulation by the user 300. The acoustic notifier 325 can be embodied using a speaker, but is not limited thereto. The user 300 can immediately determine the validity of the button that the user 300 pressed based on the acoustic feedback.

Information provided by the help notifier 322 and information provided by the display 331 can be linked. For example, while visually providing help information using the display 331, a path of buttons that the user 300 should manipulate may be displayed using the visual notifier 323. Also, the user may be notified of help information using a notifying method set, in which some of or the entire notifying methods corresponding to the visual notifying method, tactile notifying method, and acoustic notifying method are combined. For example, a button that the user 300 should press from among several buttons may be indicated visually and as the user 300 searches for that button, the vibration may become stronger so that the user 300 can easily find the button.

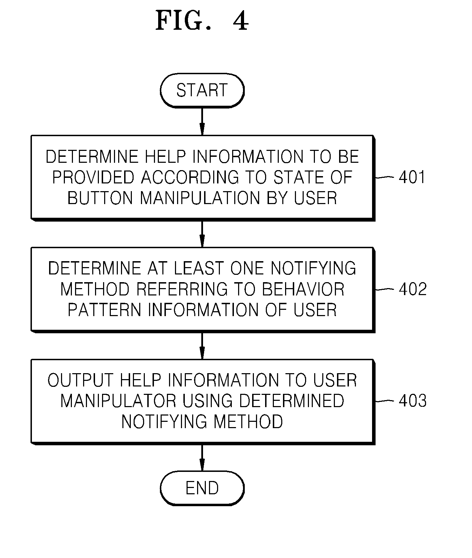

FIG. 4 is a flowchart of a method of providing help information according to an exemplary embodiment of the present invention. The method will now be described with reference to FIGS. 3 and 4.

Referring to FIGS. 3 and 4, the help determiner 333 determines help information to be provided according to a state of button manipulation by a user 300 in operation 401. When the user error detector 342 detects a moment the user 300 requires help or the user 300 transmits the help request signal 341, design information of the apparatus 330 and a usual behavior pattern of the user 300 are transmitted to the help information analysis processor 343. The help information analysis processor 343 determines or assumes the current status of the user 300 according to the current situation the user 300 is facing while manipulating the apparatus 330 and information about a pattern of using the apparatus 330 by the user 300, and deduces information required in the current situation or information about a shortcut to frequently used information, an alternative plan for parts that are often used incorrectly, or the like, using internal operations.

Help information deduced from the help information analysis processor 343 is transmitted to the display 331 and/or the help notification controller 334 using the help information transmitter 345. Where to transmit the help information can be determined based on a set-up by the user 300, a skill level of the user 300, the behavior pattern of the user 300, or the like. For example, when the user 300 is unskilled in using the apparatus 330 after referring to the usual behavior pattern, the help information is transmitted to both the display 331 and the help notification controller 334 so that the help information can be displayed not only on the display 331 but also on at least one of the visual notifier 323, the tactile notifier 324, and the acoustic notifier 325. The display 331 displays the received help information on the OSD 332. In operation 402, the help information analysis processor 343 determines a notifying method, i.e. which function of the user input apparatus 320 will be used to provide the help.

Upon receiving the help information and the notifying method from the help notification controller 334, the help notifier 322 notifies the user 300 of the help information, according to the notifying method in operation 403. The help information is updated in real time according to the current state of button manipulation and the current status of the OSD 332. If a signal requesting to stop providing the help information is received, the display 331 and/or the help notifier 322 return to a waiting state.

FIG. 5 is a diagram for describing a concept of a method of determining a notifying method for each function according to an exemplary embodiment of the present invention. The method will now be described with reference to FIGS. 3 and 5. Referring to FIGS. 3 and 5, behavior pattern information 510 stored in the behavior pattern database 335 is used in determining a help notifying method for each function 540. The behavior pattern information 510 is an accumulation of patterns of a user using the apparatus 330, and mainly accumulates a time taken for the user to determine how to perform a particular function, a success rate of performing the particular function, and a weight determined according to the taken time and the success rate, when the user manipulates help information, given as an initial default, and a menu structure in the apparatus 300. The weight can be used in determining and changing the notifying method for each function 540. Accordingly, the weight of each notifying method and a notifying method set is calculated based on the behavior pattern information 510 and is changed when required. However, a priority may be granted on a notifying method directly selected and set by the user. In other words, the notifying method selected and set directly by the user is given the highest weight. The help information analysis processor 343 automatically changes the notifying method to a notifying method, in which the user can quickly cope with each situation without going wrong, using the behavior pattern database 335. The notifying method can be changed when a more effective notifying method is suggested because the previous notifying method is not suitable to the user, when the user thinks that there is a better notifying method, or when it is determined that another notifying method is more effective as a skill level of the user changes.

In FIG. 5, a user input device or a user manipulator 500 includes a visual notifier 501, a tactile notifier 502, and an acoustic notifier 503. The visual notifier 501 includes an LED 521, a light 522, etc. as a notifying method model 520, the tactile notifier 502 includes a vibration 523, feeling 524, and temperature 525, etc. as the notifying method model 520, and the acoustic notifier 503 includes a sound 526, a voice 527, etc. as the notifying method model 520. The weight is calculated and accumulated based on how each notifying method model 520 corresponds to a preference and behavior pattern of the user.

Accordingly, notifying method sets 530 are determined, with which at least one notifying method model 520 is combined. For example, a first feedback method 531 notifies the help information using the LED 521 and the vibration 523, and a second feedback method 532 notifies the help information using the LED 521 and the light 522. The weight of each notifying method set 530 for each function 540 is set and managed, and the weight can be calculated considering a weight of each notifying method model 520, and the preference and behavior pattern of the user on each notifying method model 520.

A feedback method having the highest weight for a certain function from among the notifying method sets 530 is assigned as a notifying method set of the corresponding function. For example, the first feedback method 531 has the highest weight for a first function 541, and thus when the user requests help for the first function 541 or it is determined that the user requires the help for the first function 541, a manipulation method of the first function 541 is notified by the user manipulator 500 using the LED 521 and the vibration 523.

An example of a scenario determining a weight of each notifying method is as follows. When intervals of an input time between continuously pressed buttons are short, the user may be skillful in using the menu structure, whose time taken to determine how to perform a particular function is short and a success rate is high. Accordingly, a tactile notifying method, in which continuous help information notification is easily performed, is efficient, and thus the weight of the tactile notifying method increases. Alternatively, when intervals of an input time between continuously pressed buttons are long, the user may be unfamiliar with using the menu structure, whose time taken to determine how to perform a particular function is long and a success rate is low. Accordingly, a visual notifying method, which neatly shows help information without many stimuli, may be more efficient than the tactile notifying method, which stimulates the user for a long time, or an acoustic notifying method, which notifies the help information in a short time.

When the user repeatedly presses a button already manipulated, the user may want to receive feedback on whether the pressed button pressed has been correctly inputted. Accordingly, feedback is provided according to the acoustic notifying method. When help information for a certain function is provided to the user in the acoustic notifying method and manipulation errors are frequently made, the current feedback method may not be efficient for the user, and thus another notifying method can be suggested. At this time, if unclear acoustic feedback is a problem, the visual notifying method, which can more clearly notify the help information, can be additionally provided.

If the user changed a notifying method using a setting function because the user does not like the notifying method, a notifying method set by the user is given the highest weight. When a skill level of the user changes, for example, when it is determined that the user can use a high grade feedback function that was not previously provided, a new notifying method can be suggested. Using the new notifying method, the help that was being provided using an unnecessarily large amount of notifying methods can be reduced, or more notifying methods can be simultaneously used by increasing a rate of feedback. When battery consumption is high because frequency of help information notification is high, or the user using several notifying methods requests a power saving function, or the power saving function is required for some other reasons, the notifying method can be changed to a notifying method that consumes low power, or a notifying method having a low weight can be excluded. For example, a method of changing the temperature 525 or a method of using the vibration 523 consumes a lot of battery power, and thus the visual notifying method can be used. The notifying method can be determined according to characteristics of the apparatus 300 or functions of the menu.

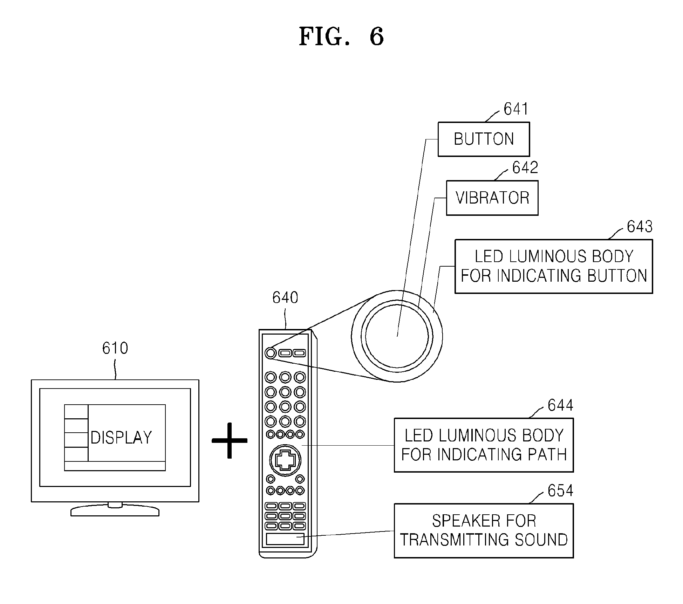

FIG. 6 is a diagram illustrating when a host and a controller are separated according to an exemplary embodiment of the present invention.

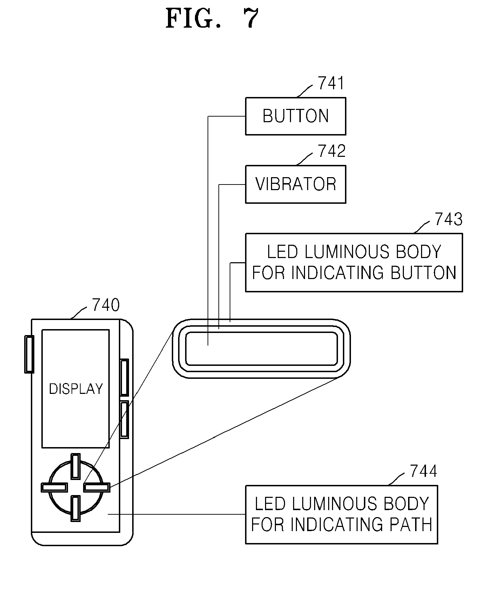

Referring to FIG. 6, a help provider 610, which is the host, and a user input apparatus 640, which is the controller, are separately prepared. OSD information and help information may be displayed on the help provider 610. A vibrator 642 and an LED luminous body 643 for indicating a button are installed around each button 641 of the user input apparatus 640. An LED luminous body 643 for indicating a path is installed in spaces between buttons 641, and a speaker 654 for transmitting sound is installed on the bottom of the user input apparatus 640. FIG. 7 is a diagram illustrating when a host and a controller are combined according to an exemplary embodiment of the present invention.

Referring to FIG. 7, the host and the controller, i.e. a help provider and a user input apparatus, are physically combined as one apparatus 740. A vibrator 742 and an LED luminous body 743 for indicating a button are installed around each button 741 of a user manipulator, and an LED luminous body 744 for indicating a path is installed in spaces between each button 741.

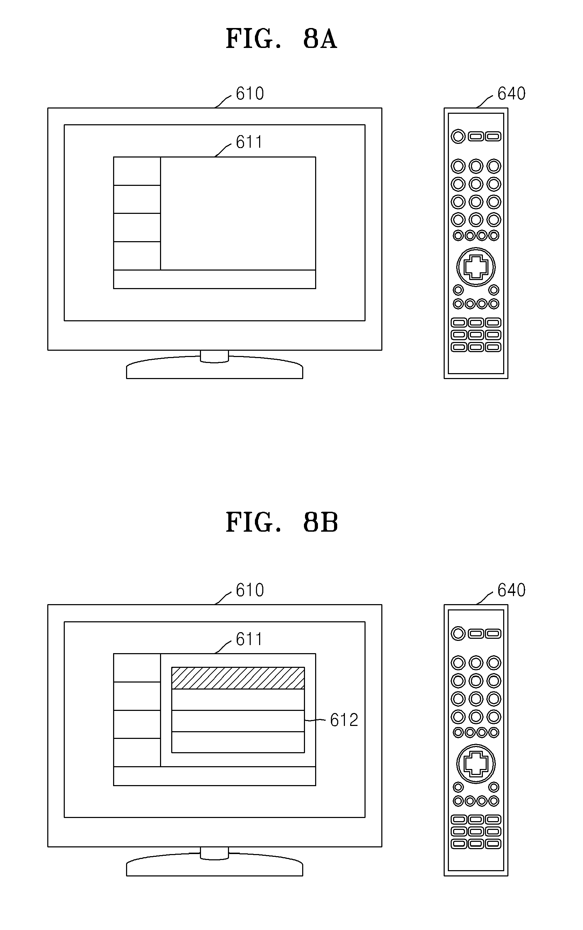

FIGS. 8A through 8G are diagrams illustrating how a user is notified of help information according to an exemplary embodiment of the present invention. In FIGS. 8A through 8G, a user searches a menu structure for an automatic channel setting up function, and a host 610 and a controller 640 are separated.

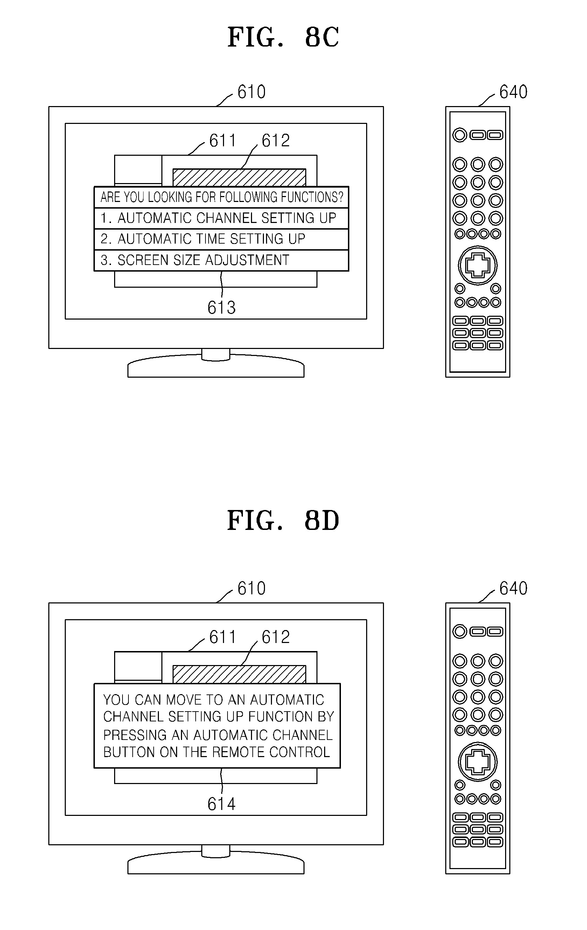

Referring to FIG. 8A, the user accesses an OSD menu 611. Referring to FIG. 8B, the user repeatedly searches a part 612 from among a menu tree. Accordingly, the user error detector 342 detects that the part 612 is a part where the user usually wanders, and transmits the help request signal 341 to the help information analysis processor 343. Then, the help information analysis processor 343 analyzes the current menu location and behavior pattern information of the user, and generates a function list which includes at least one predicted function by predicting a function that the user is going to execute. Referring to FIG. 8C, a predicted function list 613 is displayed on a screen, and it is determined that information about manipulating a button for executing the automatic channel setting up function, which is a function selected by the user from the function list 613, is to be provided.

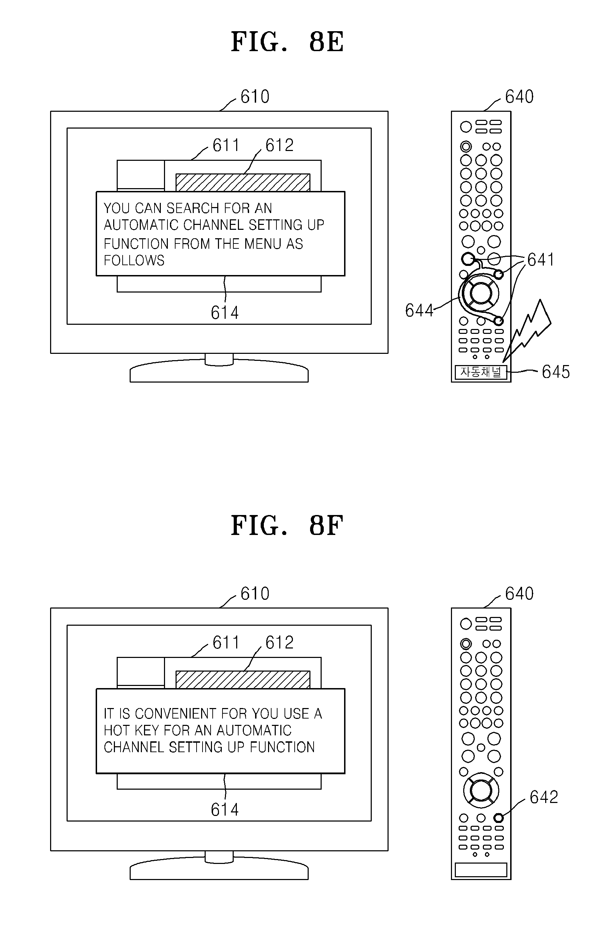

FIG. 8D is a diagram illustrating when help information is provided by simply displaying a direction 614 on an OSD according to a related art technology. However, according to the current exemplary embodiment, the help information can be provided using various methods as illustrated in FIGS. 8E through 8G. A notifying method can be changed according to a selection or a behavior pattern of the user, and when it is determined that the help information is not enough based on the skill level of the user, a notifying method set can be changed.

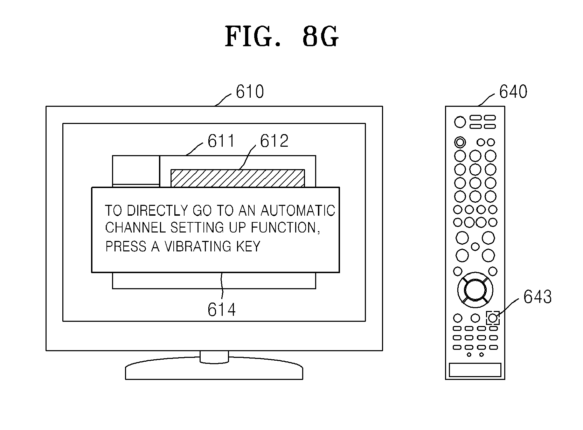

In FIG. 8E, a buttons 641 can be visually indicated with the direction 614 on the screen, a manipulation path 644 is indicated on spaces between each button 641, vibration moves according to the direction of buttons 641, and a voice is heard through a speaker 645, saying whether the user is correctly manipulating the buttons 641. Referring to FIG. 8F, in order to inform the user of a method of selecting an automatic channel, a hot key 642 for the automatic channel setting up function emits light and the temperature of the corresponding button is changed in order to induce the user to manipulate the button. The user may first find the hot key 642 by looking at the emitting light of the controller 640, but when reception of tactile information is set, the user can find the hot key 642 by a change in temperature. Referring to FIG. 8G, the user is induced to manipulate a button 643, which can execute the automatic channel setting up function, by dynamically setting up the button 643 and vibrating the button 643.

The invention can also be embodied as computer readable codes on a computer readable recording medium.

According to the exemplary embodiments of the present invention, in all devices operating by a remote control or buttons, help information, which has been provided on a display in a related art manner, can be effectively and intuitionally provided by installing an LED or a tactile notifier around buttons or an acoustic message notifier on a user manipulator.

Also, by embodying visual indication or using tactile sense or acoustic sense for a button that is to be used when transmitting information, more accurate and various help information can be provided.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of providing help information relating to manipulation of an apparatus, the method comprising:
determining the help information to be provided according to a state of button manipulation by a user;
determining at least one notifying method, among a plurality of notifying methods, for providing the help information referring to behavior pattern information of the user; and
outputting the help information to a user manipulator using the at least one notifying method.

2. The method of claim 1, wherein the determining the help information to be provided comprises:
if an error is detected in the button manipulation, generating a function list which comprises at least one predicted function, by predicting a function that the user is to execute; and
determining information about a button manipulation method for executing a function selected by the user from the function list as the help information to be provided.

3. The method of claim 1 or 2, further comprising:
generating a plurality of notifying method sets, each notifying method set comprising one or more notifying methods among the plurality of notifying methods;
providing the plurality of notifying method sets with a respective weight calculated based on the behavior pattern information; and
generating and managing the behavior pattern information based on a time taken for the user to determine how to perform a particular function of the apparatus and a success rate of performing the particular function when the plurality of notifying method sets are used for a plurality of functions of the apparatus,
wherein determining at least one notifying method comprises determining one of the plurality of notifying method sets having a highest weight in a function related to the help information as the at least one notifying method.

4. The method of claim 3, wherein each of the plurality of notifying method sets corresponds to one of the plurality of functions of the apparatus, and wherein managing the behavior pattern information comprises changing the respective weight of the plurality of notifying method sets according to a change of the time taken and the success rate.

5. The method of claim 3, wherein managing the behaviour pattern information comprises giving the highest weight to a notifying method set requested by the user.

6. The method of any one of the preceding claims, wherein the at least one notifying method is at least one of a visual notifying method, a tactile notifying method, and an acoustic notifying method used by the user manipulator.

7. The method of claim 6, wherein the visual notifying method induces the button manipulation of the user using at least one of a luminous body for a button indication and a luminous body for a path indication, prepared on the user manipulator.

8. The method of claim 6 or 7, wherein the tactile notifying method induces the button manipulation of the user by vibrating a button corresponding to the help information or changing the temperature of the button by operating a vibrator prepared in the user manipulator.

9. The method of claim 6, 7 or 8, wherein the acoustic notifying method reproduces audio data for inducing the button manipulation of the user or for providing a feedback about the button manipulation of the user, using a speaker installed in the user manipulator.

10. The method of claim 1, further comprising providing the plurality of notifying methods with respective weights calculated based on the behavior pattern information,
wherein the at least one notifying method has a highest weight.

11. An apparatus for providing help information relating to manipulation of the apparatus, the apparatus comprising:
a help determiner which determines the help information to be provided according to a state of button manipulation by a user, and determines at least one notifying method, among a plurality of notifying methods, for providing the help information referring to behavior pattern information of the user; and
a help notification controller which controls a help notifier in a user manipulator to output the help information using the at least one notifying method.

12. The apparatus of claim 11, wherein, if an error is detected in the button manipulation, the help determiner generates a function list comprising at least one predicted function by predicting a function that the user is to execute, and determines information about a button manipulation method for executing a function selected by the user from the function list as the help information to be provided.

13. The apparatus of claim 11 or 12, further comprising a behavior pattern database which stores the behavior pattern information which is generated based on a time taken for the user to determine how to perform a particular function of the apparatus and a success rate of performing the particular function when a plurality of notifying method sets are used for a plurality of functions of the apparatus,
wherein each of the plurality of notifying method sets comprises one or more notifying methods among the plurality of notifying methods,
wherein the plurality of notifying method sets are given a respective weight calculated based on the behavior pattern information, and
wherein the help determiner determines one of the plurality of notifying method sets having a highest weight in a function related to the help information as the at least one notifying method referring to the behavior pattern information.

14. The apparatus of claim 13, wherein each of the plurality of notifying method sets corresponds to each of the plurality of functions of the apparatus, and
wherein the respective weight of the plurality of notifying method sets changes according to a change of the time taken and the success rate.

15. The apparatus of claim 13, wherein the respective weight of the plurality of notifying method sets changes by giving the highest weight to a notifying method set requested by the user.

16. The apparatus of any one of claims 11 to 15, wherein the at least one notifying method is at least one of a visual notifying method, a tactile notifying method, and an acoustic notifying method through the user manipulator.

17. A user input apparatus for providing help information about manipulating an apparatus, the user input apparatus comprising:
a main body which comprises a plurality of buttons; and
a help notifier which comprises at least one of a visual notifier, a tactile notifier, and an acoustic notifier, for notifying information on manipulating a button from among the plurality of buttons in order to perform a function of the apparatus.

18. The user input apparatus of claim 17, wherein the visual notifier comprises at least one of a luminous body for visually classifying a button, corresponding to the help information, from among the plurality of buttons from remaining buttons and a luminous body for indicating a path between the plurality of buttons.

19. The user input apparatus of claim 17 or 18, wherein the tactile notifier comprises a vibrator which induces button manipulation of a user by vibrating a button, corresponding to the help information, from among the plurality of buttons, or by changing temperature of the button.

20. The user input apparatus of claim 17, 18 or 19, wherein the acoustic notifier comprises a speaker which reproduces audio data for inducing button manipulation of a user or for providing a feedback about the button manipulation of the user.

21. A computer program which, when executed by a processor, is arranged to perform a method according to any one of claims 1 to 10.
